# EUROPEAN PATENT APPLICATION

(11) **EP 4 282 631 A1**
(43) Date of publication of application: **29.11.2023**
(21) Application number: 22382510.0
(22) Date of filing: 27.05.2022
(51) Int. Cl.: B29C 71/00, B29C 35/08, B29C 64/35, B29C 71/04

(54) **DEVICE AND POST-PROCESSING METHOD OF RESIN-BASED PIECES MANUFACTURED BY 3D-PRINTING**

(71) Applicant: Barcelona Three Dimensional Printers, S. L., 08850 Gavà Barcelona (ES)
(72) Inventor: Raventós Sánchez, Oriol, Gavà (ES); Destro, Dario, Gavà (ES); Gusano Sánchez, Andrea, Gavà (ES); Martins Barroeta, Manuel Joao, Gavà (ES); Pallarés García, Eric, Gavà (ES)
(74) Representative: Pons

(57) **Abstract**

The present invention relates to a method and device (1) for post-processing resin-based parts that are manufactured by means of 3D printing, wherein said device (1) comprises a tank (2) that houses a cleaning solution (7) where the printed part is submerged, one or more polymerisation elements that activate an initiator contained in the resin of the part that remains emulsified in the cleaning solution, thus solidifying said emulsified resin, a filter unit (5) that filters particles of the solidified resin, and a flocculation module (5) comprising one or more flocculation elements that bind the solidified resin into particles or into a group of particles before passing them through the filter unit (5).

## Description

### OBJECT OF THE INVENTION

The present invention can be included within the technical field of reactors or post-processing equipment for parts that are printed by means of 3D printing, wherein said parts are resin-based. More specifically, the object of the invention relates to a device and a method that enables a cleaning solution that is used during curing to be reused, said reuse is made possible thanks to the solidification, flocculation, binding and filtering of the resin emulsified in the cleaning solution during the curing of the part.

### BACKGROUND OF THE INVENTION

3D printed parts produced using resin-based technology require a cleaning step after printing due to the fact that the finished object comes out of the printer covered in unreacted liquid resin. The cleaning process is usually done by immersing the part in isopropyl alcohol with mechanical or ultrasonic stirring to accelerate the dissolution of the unreacted resin. This process requires the use of large amounts of organic solvent, which must be frequently replaced, to ensure optimal results. This implies risks and costs for health, safety and the environment, as well as an increase in the cost per part due to the direct labour that is used in the process.

Other processes use an aqueous or water-based cleaning solution and stirring means to remove excess resin from the part and cause the resin to be emulsified in the solution. However, once the resin has emulsified, the cleaning solution is discarded since it comprises solidified resin therein, subsequently a new cleaning solution is used and the part is cured. This is described, for example, in document WO2020232662A1.

### DESCRIPTION OF THE INVENTION

A first aspect of the present invention describes a device for post-processing resin-based parts that are manufactured by means of 3D printing, wherein said device comprises:
- a cleaning tank that houses a cleaning solution where the printed part is immersed,
- a reactor comprising one or more polymerisation elements that activate an initiator contained in the resin of the part that remains emulsified in the cleaning solution, or else comprised in the cleaning solution itself, thus solidifying said emulsified resin,
- a filter unit that filters particles from the solidified resin,
wherein said device further comprises a flocculation module fed by the cleaning solution with the emulsified resin solids, wherein said flocculation module comprises one or more flocculation elements that bind the solidified resin into particles or into a group of particles before passing through the filter unit.

Preferably, it is a water-based cleaning solution.

In a preferred embodiment, the one or more polymerisation elements comprise a light emitting source with a wavelength capable of initiating the activation of the initiator (in this embodiment, a photoinitiator) contained in the emulsion resin or in the cleaning solution.

Alternatively or as a complement to that described above, the one or more polymerisation elements comprise a radical initiator in solid or liquid form, and optionally a dispenser or an actuator, to introduce said liquid or solid radical initiator in the cleaning solution.

Likewise, the one or more flocculation elements may further comprise at least two electrophoretic plates immersed in the cleaning solution with the flocculating agent. More particularly, an electrophoretic effect is produced, caused by two electrodes immersed in the cleaning solution.

To decrease residence times and increase agglomeration or flocculation, one or more auxiliary flocculation elements may optionally be used.

In an exemplary embodiment, an auxiliary flocculation element is provided as an ultrasound source that emits vibrations in the cleaning solution with the flocculation agent to favour the collision of solidified resin particles that are immersed in the fluid.

Alternatively or in addition, an auxiliary flocculation element is a mechanical stirrer that causes turbulence in the cleaning solution once the resin has solidified to favour the agglomeration thereof.

Also, the one or more auxiliary flocculation elements can be heating elements configured to exert heating ramps on the cleaning solution of between 20° to 100°C. Said heating elements and the active temperature control not only improve the agglomeration of resin particles but also favour the solidification of the previously emulsified resin, heaters and active temperature control enabling the overall efficiency of the process to be increased and further enabling operating times to be reduced with respect to other solutions.

Any of the auxiliary flocculation elements can be used as the only auxiliary element or in combination with one or more of the above to enhance agglomeration and flocculation of the resin in order to reuse the resulting cleaning solution.

The device described above makes it possible to dispense with isopropyl alcohol commonly used in other processes, and also enables the cleaning solution to be reused. Known processes and equipment for curing resin-based parts require the use of large amounts of organic solvent, which must be frequently replaced to ensure optimal results. This implies risks and costs for health, safety and the environment, as well as an increase in the cost per part due to the direct labour that is used in the process.

In addition, the device described above enables the liquid to be reused a significant number of times since it enables the filtering of resin from the cleaning solution that must be reused to be maximised. The more particles that remain emulsified or unfiltered, the fewer times the cleaning solution can be reused.

In a preferred embodiment, one or more of the elements of the flocculation module and the reactor are in the same tank. In an alternative embodiment, the cleaning solution with emulsified resin is pumped to the reactor and subsequently to the flocculation module, these being in separate tanks.

Likewise, preferably the part can be cured in the cleaning tank and the cleaning solution with emulsified resin is passed through the reactor wherein the emulsified resin is solidified.

As an alternative or complement to the one or more flocculation elements and to one or more auxiliary flocculation elements, and to enhance the advantages described above, in a preferred embodiment a flocculation conduit is described as part of or connected to the flocculation module, wherein said flocculation conduit comprises an external conduit that has been sized to channel the cleaning solution with solidified resin immersed in the same from or into the flocculation module. Optionally, it could include pumping or drive elements to drive the pressurised liquid through the external conduit.

Preferably, said flocculation conduit internally comprises a plurality of concave fins connected to the external conduit, said concave fins arranged opposite each other to favour a turbulent flow of the cleaning solution with the solidified resin immersed in the same

In a preferred embodiment, the flocculation conduit comprises a plurality of obstacles connected internally to the external conduit to favour a turbulent flow of the cleaning solution with the solidified resin immersed in the same and favour the agglomeration of resin particles as a result. Said obstacles may have a spherical-type configuration.

Alternatively, the flocculation conduit comprises an internal conduit connected to the external conduit, wherein the internal conduit comprises a cross section smaller than that of the external conduit in order to increase the speed of the flow and favour the agglomeration of resin particles.

Likewise, any of the flocculation units described above can be equipped with a gas conduit, which passes through the external conduit and injects a gas, for example air, into the external conduit which channels the cleaning solution.

Additionally, the flocculation conduit can have a mesh that passes through the cross section through the inside of the external conduit.

As for the filter unit, it can optionally be equipped with a long-mesh filter cartridge of the type that filters agglomerated resin particles with a size equal to or greater than 50 µm.

Optionally, the filter unit further comprises another filter with a filter cartridge capable of separating microparticles (0.5 - 50 µm).

Once the part and the cleaning solution have been cleaned, with the resin solidified and filtered, the part can be suitably cured in a device or method outside the scope of the present invention.

In a second aspect of the present invention, a method for post-processing resin-based parts that are manufactured by means of 3D printing is described, comprising the steps of:
a.) introducing a cleaning liquid into a tank,
b.) introducing the resin-based part into the cleaning solution,
c.) solidifying the residues dispersed in the solution through a polymerisation.
d.) binding and flocculating the solidified resin immersed in the cleaning solution,
e.) filtering the particles or group of resin particles that have been generated and agglomerated,
f.) reusing in step a.) the resulting liquid after filtering in step d.).

For step d.) the process can make use of any of the flocculation elements and of the auxiliary flocculation elements by themselves or in combination to enhance the binding and flocculation of the resin, maximising the filtering thereof as a result.

The process may optionally comprise a step g.) consisting of generating turbulence in the cleaning solution by emulsifying the resin of the part in the cleaning solution, giving rise to dispersed residues in the cleaning solution, wherein said step is executed after step b.) and before step c.).

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:
Figure 1 shows a schematic front view of a preferred embodiment of the device, wherein the tank, the flocculation elements, the auxiliary flocculation elements and the flocculation conduit are illustrated.
Figure 2 shows a schematic front view of a plurality of preferred embodiments of the flocculation conduit according to the present invention.
Figure 3 shows a preferred embodiment of the filter unit according to the present invention.

### PREFERRED EMBODIMENT OF THE INVENTION

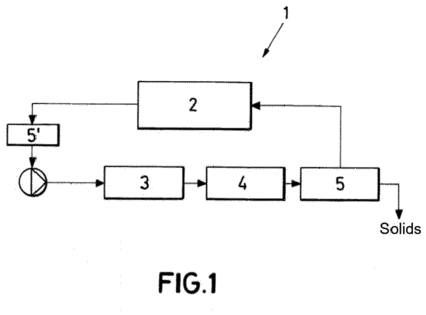

A detailed description of preferred exemplary embodiments of the object of the invention is provided below, with the aid of the attached Figures 1-3 described above.

As shown in figure 1, in a first preferred embodiment according to the present invention, a device (1) for post-processing resin-based parts that are manufactured by means of 3D printing is described, wherein said device (1) comprises a cleaning tank (2) that houses a water-based cleaning solution (7) wherein the printed part is to be immersed.

Furthermore, the device (1) comprises a photoreactor (3) and a flocculation module (4) fluidly connected with each other.

The cleaning solution with emulsified resin is passed through the photoreactor (3) which in turn comprises one or more polymerisation elements that activate a photoinitiator contained either in the resin of the part that remains emulsified in the cleaning solution or in the cleaning solution itself, thus solidifying said emulsified resin.

Subsequently, the solidified resin cleaning solution is passed through a flocculation module (5) comprising one or more flocculation elements that bind the solidified resin into particles or into a group of particles before passing through a filter unit (5).

In this way, the cleaning solution can be reused multiple times. In a preferred embodiment, the device includes a prefiltering module (5') that performs an auxiliary filtering of the cleaning solution with emulsified resin before passing through the photoreactor (3).

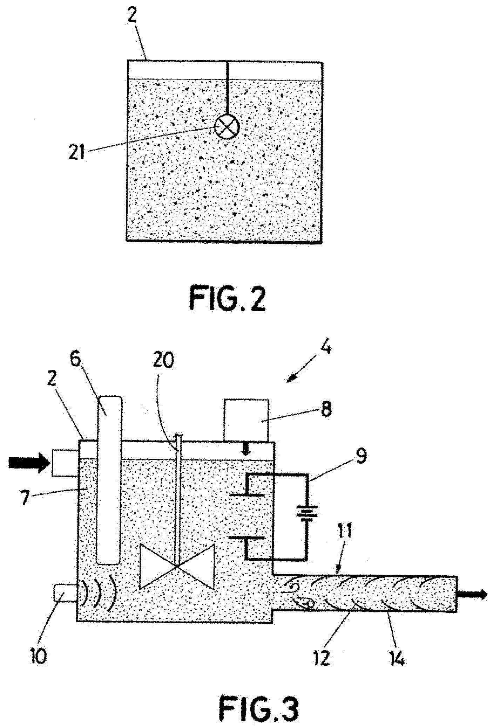

As shown in Figure 2, in a preferred embodiment the photoreactor (4) comprises a first polymerisation element provided as a light emitting source (21) with a wavelength capable of initiating the activation of the photoinitiator contained in the emulsion resin originally in the part, thus solidifying said emulsified resin in the cleaning solution (7).

As shown in figure 3, the flocculation module (5) comprises a first flocculation element materialised in a flocculant dispenser (8) that dispenses a flocculating agent in the cleaning solution (7).

In addition, in the preferred embodiment described by Figure 3, second flocculation elements materialised in two electrophoretic plates (9) immersed in the cleaning solution (7) are illustrated.

Likewise, the preferred embodiment of figure 3 describes a plurality of auxiliary flocculation elements to favour said flocculation and the binding of particles. First auxiliary flocculation elements in a preferred embodiment are materialised in an ultrasound source (10) that emits vibrations in the cleaning solution (7) for the collision of solidified resin particles immersed in the fluid.

Second auxiliary flocculation elements, as shown in Figure 3, are heating elements (6) configured to exert heating ramps on the cleaning solution (17) between 20 °C and 100 °C.

Third auxiliary flocculation elements can be a mechanical stirrer (20) that causes turbulence in the cleaning solution (7) once the resin has solidified to favour the agglomeration thereof.

In addition, the flocculation module (5) in the preferred embodiment of figure 3, comprises a flocculation conduit (11) connected to an outlet of the tank (2) and to the filter unit (5), wherein said flocculation conduit (11) comprises an external conduit (14) that has been sized to channel the cleaning solution (7) with the solidified resin immersed in the same. Optionally, it can be equipped with a pumping element (not shown) to pump or drive the cleaning liquid (7) towards the flocculation conduit (11).

In the preferred embodiment shown by Figure 3, the flocculation conduit (11) comprises a plurality of concave fins (12) connected to the external conduit (14), wherein said concave fins (12) are arranged opposite each other to favour a turbulent flow of the cleaning solution (7) with the resin solidified and immersed in the same.

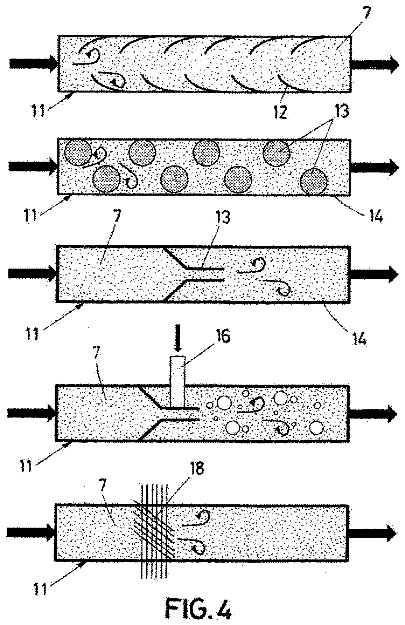

Figure 4 shows five different embodiments of the flocculation conduit (11) according to the present invention, the first of them being the one explained above for figure 3.

Next, a second embodiment of the flocculation conduit (11) is represented, wherein it comprises a plurality of obstacles (13) connected internally to the external conduit (14) to favour a turbulent flow of the cleaning solution (7) with the solidified resin immersed in the same and, as a result, favour the agglomeration of resin particles.

A third embodiment is shown below wherein the flocculation conduit (11) comprises an internal conduit (15) connected to the external conduit (14), wherein the internal conduit (15) comprises a smaller cross section than that of the external conduit (15), forcing the flow to pass through a sudden change in cross section to favour the collision and agglomeration of the resin particles.

Preferably, in a fourth preferred embodiment, as shown in the following schematic representation, said flocculation conduit (11) comprises a gas conduit (16) that passes through the external conduit (15) and injects air into the external conduit (15) that channels the cleaning solution (7).

According to another preferred embodiment shown in Figure 4, the flocculation conduit (11) comprises a mesh (18) connected to the external conduit (14), wherein said mesh passes through the cross section of the same.

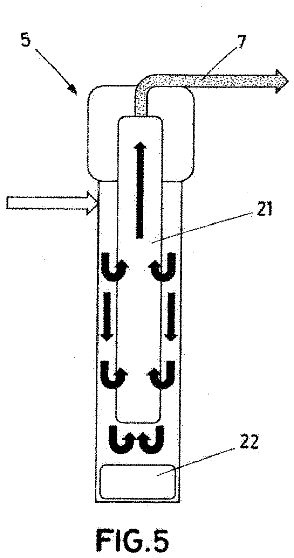

Finally, the cleaning solution (7) with the bound particles passes through the filter unit (5) shown in figure 5. The filter unit (5) is equipped with a long mesh filter cartridge of the type that filters agglomerated resin particles with a size equal to or greater than 50 µm, a filtered resin powder (22) is schematically shown in figure 5.

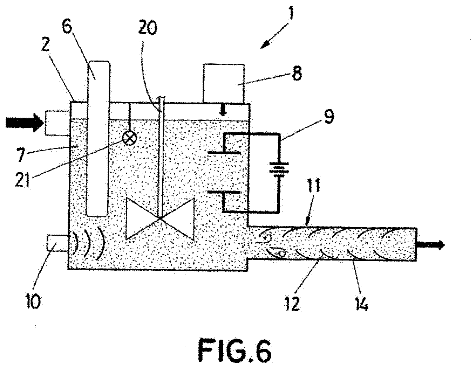

Figure 6 shows a preferred embodiment wherein the flocculation module (5) and the photoreactor (4) are arranged in the same tank. The flocculation module (5) can comprise at least one flocculation element and/or at least one auxiliary flocculation element. In the same way, the photoreactor (4) can have at least one polymerisation element.

In the present embodiment, photoreactor (4) is understood as at least one polymerisation element and flocculation module (5) is understood as at least one flocculation element, even though both are arranged in the same module or tank.

In the preferred embodiment of Figure 6, all the aforementioned elements are shown arranged in the same tank.

In a second aspect of the present invention, a method for post-processing resin-based parts that are manufactured by means of 3D printing is described, comprising the steps of:
a.) introducing a cleaning liquid (7) into a cleaning tank (1),
b.) introducing the resin-based part into the cleaning solution (7),
c.) solidifying the residues dispersed in the solution through a polymerisation.
d.) binding and flocculating the solidified resin,
e.) filtering the particles or group of resin particles that have been generated and agglomerated,
f.) reusing in step a.) the resulting liquid (7') after filtering in step e.).

## Claims

1. - A device (1) for post-processing resin-based parts that are manufactured by means of 3D printing, wherein said device (1) comprises:
- a cleaning tank (2) that houses a cleaning solution (7) wherein the printed part is immersed and resin particles are emulsified,
- a reactor (3) comprising one or more polymerisation elements that activate an initiator contained in the emulsified resin in the cleaning solution, thus solidifying said emulsified resin,
- a filter unit (5) that filters particles from the solidified resin,
wherein said device (1) is **characterised in that** it further comprises a flocculation module (4) fed by the cleaning solution (7) with the emulsified resin solids, wherein said flocculation module (4) comprises one or more flocculation elements that bind the solidified resin into particles or into a group of particles before passing through the filter unit (5).

2. The device (1) of claim 1, wherein the initiator is a photoinitiator and the one or more polymerisation elements comprise a light emitting source (21) with a wavelength capable of initiating the activation of the photoinitiator contained in the emulsion resin or in the cleaning solution.

3. The device (1) of claim 1, the one or more polymerisation elements comprise a radical initiator in solid or liquid form and means for introducing said radical initiator into the cleaning solution (7) housed inside the reactor (3).

4. The device (1) of claim 1, wherein the one or more flocculation elements comprise electrophoretic plates (9) immersed in the cleaning solution (7).

5. The device (1) of claim 1, comprising one or more auxiliary flocculation elements materialised in an ultrasound source (10) that emits vibrations in the cleaning solution (7) for the collision of solidified resin particles immersed in the fluid.

6. The device (1) of claim 1, comprising one or more auxiliary flocculation elements materialised in a mechanical stirrer (20) that causes turbulence in the cleaning solution (7) once the resin has solidified to favour the agglomeration thereof.

7. The device (1) of claim 1, comprising one or more auxiliary flocculation elements materialised as heating elements (6) configured to exert heating ramps on the cleaning solution (17) between 20 °C to 100 °C.

8. The device (1) of claim 1, wherein the flocculation module (5) comprises a flocculation conduit (11), wherein said flocculation conduit (11) comprises an external conduit (14) that has been sized to channel the cleaning solution (7) with the solidified resin immersed in the same.

9. The device (1) of claim 8, wherein the flocculation conduit (11) comprises a plurality of concave fins (12) connected to the external conduit (14), wherein said concave fins (12) are arranged opposite each other to favour a turbulent flow of the cleaning solution (7) with the solidified resin immersed in the same

10. The device (1) of claim 8, wherein the flocculation conduit (11) comprises a plurality of obstacles (13) connected internally to the external conduit (14) to favour a turbulent flow of the cleaning solution (7) with the solidified resin immersed in the same and favour the agglomeration of resin particles as a result.

11. The device (1) of claim 8, wherein the flocculation conduit (11) comprises an internal conduit (15) connected to the external conduit (14), wherein the internal conduit (15) comprises a smaller cross section than that of the external conduit (15).

12. The device (1) of claim 11, wherein the flocculation conduit (11) comprises a gas conduit (16) that passes through the external conduit (15) and injects gas into the external conduit (15) that channels the cleaning solution (7).

13. The device (1) of claim 8, wherein the flocculation conduit (11) comprises a mesh (18) connected to the external conduit (14), wherein said mesh passes through the cross section of the same.

14. - A method for post-processing resin-based parts that are manufactured by means of 3D printing, which comprises the steps of:
a.) introducing a cleaning liquid (7) into a cleaning tank (1),
b.) introducing the resin-based part into the cleaning solution (7),
c.) solidifying the residues dispersed in the solution through a polymerization,
d.) binding and flocculating the solidified resin,
e.) filtering the particles or group of resin particles that have been generated and agglomerated,
f.) reusing in step a.) the resulting liquid (7') after filtering in step e.).

15. The method of claim 14, comprising a step g.) consisting of generating turbulence in the cleaning solution (7) emulsifying the resin of the part in the cleaning solution (7), giving rise to dispersed residues in said cleaning solution (7), wherein said step is executed after step b.) and before step c.).
